# EUROPÄISCHE PATENTANMELDUNG

(11) **EP 2 266 700 A2**
(43) Veröffentlichungstag der Anmeldung: **29.12.2010**
(21) Anmeldenummer: 10006264.5
(22) Anmeldetag: 16.06.2010
(51) Int. Cl.: B02C 4/04, B02C 4/30, B02C 4/44, A23G 1/12, A23G 7/02

(54) **Walze, insbesondere Refinerwalze**

(30) Priorität: 22.06.2009 DE 102009030073; 15.07.2009 DE 102009033482
(71) Anmelder: Leohnard Breitenbach GmbH, 57072 Siegen (DE)
(72) Erfinder: Böhlemann, Jürgen, 57590 Neunkirchen (DE); Fischer, Uwe, 57072 Siegen (DE)
(74) Vertreter: Gesthuysen, von Rohr & Eggert

(57) **Zusammenfassung**

Beschrieben und dargestellt ist eine Walze (1), insbesondere eine Refinerwalze, mit einem Walzenkörper (2) und einem Leitkörper (3), wobei der Walzenkörper (2) einen Walzenmantel (4), ein erstes Stirnelement (5) und ein zweites Stirnelement (6) aufweist, und wobei in dem Walzenkörper (2) der Leitkörper (3) mit einer Kühlmittelführungsemrichtung (7) angeordnet ist.

Eine Walze, insbesondere eine Refinerwalze, die eine effektive Kühlung der Walzenoberfläche gewährleistet und eine gesteigerte Verschleißbeständigkeit im Vergleich zu den bisher bekannten balligen Walzen aufweist, ist **dadurch gekennzeichnet, dass** der Leitkörper (3) und die Kühlmittelführungseinrichtung (7) von dem Walzenmantel (4) mechanisch entkoppelt sind, indem der Leitkörper (3) oder die Kühlmittelführungseinrichtung (7) elastisch ist, so dass der Leitkörper (3) oder die Kühlmittelführungseinrichtung (7) einer senkrecht zur Richtung der Achse gerichteten Durchbiegung des Walzenmantels (4) ausweichen bzw. dieser Bewegung folgen kann, ohne der Durchbiegung des Walzenmantels (4) nennenswerte Kräfte entgegenzusetzen.

## Beschreibung

Die Erfindung betrifft eine Walze, insbesondere eine Refinerwalze, mit einem Walzenkörper und einem Leitkörper, wobei der Walzenkörper einen Walzenmantel, ein erstes Stirnelement und ein zweites Stirnelement aufweist, und wobei in dem Walzenkörper der Leitkörper mit einer Kühlmittelführungseinrichtung angeordnet ist.

Walzen der vorgenannten Art kommen beispielsweise in Feinwalzwerken zum Einsatz und dienen insbesondere zum Zerkleinern und Mahlen von zähffüssigen oder pastösen Massen in ein Feingut. In der Regel erfordern die Anwendungen einen extrem fein regelbaren Abstand zwischen den Walzen. Die Länge der Walzen, insbesondere der nutzbare Arbeitsbereich, soll dabei möglichst groß sein, wobei die Walzen gleichzeitig eine möglichst geringe Masse aufweisen und einem hohen Walzdruck standhalten sollen. Durch die letztgenannten Anforderungen ist es oft unvermeidbar, dass Biegeeffekte entlang einer Walze auftreten, wobei zudem häufig thermische Verformungen entstehen, woraus insgesamt häufig ein ungleichmäßiger Walzspalt resultiert.

Zur Beseitigung dieses Problems sind viele Lösungen vorgeschlagen worden. Beispielsweise werden so genannte bombierte Walzen verwendet, die ein tonnenförmiges Profil aufweisen, das im zentralen Mittelbereich der Walze leicht verdickt ist. Die gezielte tonnenartig Verdickung der Walze zur Mitte hin soll die Durchbiegung im Betriebszustand ausgleichen, so dass die Durchbiegung der Walze unter den gewünschten Betriebsbedingungen zu einem geraden Profil und einem über die gesamte Länge der Walze konstanten Walzspalt führt.

Des Weiteren ist es bekannt, Walzen mittels eines Wärmeträgermediums zu kühlen oder zu heizen. Die DE 10 2004 056 750 A1 beschreibt eine Walze, in die ein Kühlkörper eingepresst ist, der eine Zwangsführung eines Kühlmittels innerhalb des Walzenkörpers, entlang der Mantelinnenfläche ermöglicht, Nachteilig an den aus dem Stand der Technik bekannten Walzen ist, dass sich deren Steifigkeit und deren Biegelinie durch den eingepressten Kühlkörper verändert, was zu einem erhöhten Verschleiß und damit zu einer schnelleren Abnutzung der Walzenoberfläche und zu kürzeren Warmngsmtervallen führen kann.

Der vorliegenden Erfindung liegt daher die Aufgabe zugrunde, eine Walze, insbesondere eine Refinerwalze anzugeben, die eine effektive Kühlung der Walzenoberfläche gewährleistet und eine erhöhte Verschleißbeständigkeit im Vergleich zu den bisher bekannten balligen Walzen mit Kühlwasserzwangsführung aufweist.

Die vorgenannte Aufgabe wird erfindungsgemäß zunächst und im Wesentlichen bei einer Walze der eingangs genannten Art dadurch gelöst, dass der Leitkörper und die Kühlmittelführungseinrichtung von dem Walzenmantel mechanisch entkoppelt sind, indem der Leitkörper und/oder die Kühlmittelführungseinrichtung elastisch sind bzw, ist. Der Walzenmantel besteht vorzugsweise aus einem Hohlzylinder, der in seinen beiden Seitenbereichen von einem ersten Stirnelement bzw. einem zweiten Stirnelement abgeschlossen ist, so dass innerhalb des Walzenmantels ein Hohlraum entsteht. Darüber hinaus ist der Walzenmantel vorzugsweise bombiert ausgeführt, d. h. er weist eine Balligkeit zur Gewährleistung eines gleichmäßigen Walzenspalts auf, da die Durchbiegung im Mittelbereich der Walze am größten ist. Innerhalb des Walzenmantels, d. h, im Hohlraum, ist der Leitkörper mit der Kühlmittelführungseinrichtung - das Kühlsystem - eingebracht und vollständig von dem Walzenmantel umschlossen.

Der Leitkörper und/oder die Kühlmittelführungseinrichtung sind dabei derart elastisch ausgebildet, dass eine mechanische Entkopplung des Leitkörpers und der Kühlmitteleinrichtung von dem Walzenmantel erfolgt. Die Nachgiebigkeit des Kühlsystems führt dazu, dass der Leitkörper und/oder die Kühlmittelführungseinrichtung einer senkrecht zur Richtung der Achse gerichteten Durchbiegung des Walzenmantels ausweichen bzw. dieser Bewegung folgen kann, ohne der Durchbiegung des Walzenmantels nennenswerte Kräfte entgegenzusetzen. Der mechanischen Entkopplung des Kühlsystems vom Walzenmantel liegt der Gedanke zu Grunde, dass die Biegeeigenschaften bzw. die Biegelinie des Walzenmantels durch das Kühlsystem nicht verändert werden sollen. Damit das Kühlsystem der Durchbiegung des Walzenmantels ausweichen kann, ohne die Durchbiegung durch nennenswerte Kräfte zu behindern, ist entweder der Leitkörper oder die Kühlmittelführungseinrichtung oder beide Bauelemente elastisch ausgeführt. Dadurch wird sichergestellt, dass sich der Walzenmantel ungehindert durchbiegen kann, im Wesentlichen so, als ob das Kühlsystem innerhalb des Walzenkörpers nicht vorhanden wäre.

Das Kühlsystem dient somit lediglich der Führung des Kühlmittels; es weicht einer Durchbiegung des Walzenmantels aus. Es können somit keine Kräfte vom Walzenmantel auf den Leitkörper oder die Kühlmittelführungseinrichtung abgeleitet werden. Die durch den Walzvorgang auf dem Walzenmantel entstehenden Kräfte werden ausschließlich über die beiden Stirnelemente auf die Walzachse übertragen.

In Abhängigkeit des Anwendungsgebiets ist es vorteilhaft, wenn die Walzenoberfläche d. h. der Walzenmantel auf seiner gesamten Walzenfläche gekühlt oder geheizt werden kann. Im Folgenden wird nur von einem Kühlsystem bzw. einer Kühlflüssigkeit gesprochen, jedoch kann es sich dabei stets auch um ein Heizsystem bzw. ein Heizmedium handeln. Dafür ist bevorzugt vorgesehen, dass der Leitkörper, die Kühlmittelführungseirichtung und die Mantelinnenfläche des Walzenmantels wenigstens einen Kanal für eine Kühlflüssigkeit definieren. Die Kühlflüssigkeit wird durch den Kanal entlang der Mantelinnenfläche des Walzenmantels geführt und so der Walzenmantel auf seiner gesamten Walzenfläche gekühlt.

Im Falle der Verwendung eines Kühlmittels erwärmt sich das Kühlmittel mit zunehmendem Verlauf innerhalb des Kanals, weshalb die Kühlleistung zum Ende des Kanals bzw. zum Ende der Walze hin abnimmt. Um eine gleichmäßige Kühlleistung, auch mit nur einem Kühlkanal zu erreichen, wird der Querschnitt des Kühlkanals vorzugsweise zu seinem Ende hin kleiner; der Querschnitt ist degressiv ausgestaltet. Das führt zu einem Anstieg der Strömungsgeschwindigkeit im Endbereich des Kühlkanals, so dass dort wo das Kühlmittel bereits eine höhere Temperatur aufweist, eine größere Strömungsgeschwindigkeit vorliegt, die insgesamt eine gleichmäßige Kühlleistung sicherstellt.

Als besonders vorteilhaft hat es sich zudem herausgestellt, wenn mindestens eine zweite Kühlmittelführungseinrichtung vorhanden ist, so dass mindestens zwei Kanäle für eine Kühlflüssigkeit definiert werden. Durch die parallelen Kanäle kann das Kühlmittel im Gleich- oder Gegenstrom geführt werden. Bei Gegenstrom ergibt sich über den Walzenmantel ebenfalls eine gleichmäßige Kühlleistung, da die Kühlmittel in gegensätzliche Richtungen gerührt werden, wodurch eine gleichmäßige Temperierung gewährleistet ist. Alternativ dazu kann zur Erhöhung der Kühlleistung das Kühlmittel auch im Gleichstrom parallel durch die mindestens zwei Kanäle geleitet werden, wobei dann vorzugsweise die Querschnitte der einzelnen Kanäle zu ihrem jeweiligen Ende hin degressiv verlaufen.

Gemäß einer bevorzugten Ausgestaltung der Walze besteht der Leitkörper aus wenigstens einem Zylinder, auf dessen Mantelfläche mindestens eine, vorzugsweise spiralförmig über den Umfang verlaufende, Dichteinrichtung als Kühlmittelführungseinrichtung angeordnet ist. Der Leitkörper weist dazu einen Durchmesser auf, der geringer ist als der Durchmesser des Walzenmantels, so dass der Leitkörper problemlos in den Walzenmantel einbringbar ist. Der Leitkörper ist vorzugsweise spiralförmig von der über seinen Umfang verlaufenden Dichteinrichtung umgeben, wobei die Höhe der Dichteinrichtung etwa dem radialen Spalt zwischen Walzenmantel und Leitkörper entspricht, so dass durch die Dichteinrichtung zwischen dem Leitkörper und dem Walzenmantel mindestens ein spiralförmig um den Leitkörper verlaufender, abgeschlossener Kanal definiert wird. Die Dichteinrichtung liegt dabei derart an der Mantelinnenfläche an, dass ein Übertreten von Kühlmittel über die Dichteinrichtung verhindert wird.

Um die mechanische Entkopplung des Walzenmantels von dem Leitkörper und der Kühlmittelführungseinrichtung zu gewährleisten, ist vorzugsweise vorgesehen, dass der Leitkörper aus einem starren Material besteht. Damit sich der Leitkörper beim Walzvorgang nicht relativ zum Walzenmantel verdreht hat es sich als vorteilhaft herausgestellt, wenn der Leitkörper in seinen Endbereichen jeweils an einem Stirnelement befestigt ist, so dass sich der Walzenmantel und der Leitkörper synchron drehen. Dadurch ist auch die Position der Kühlmittelführungseinrichtung - die an dem Leitkörper befestigt ist - relativ zum Walzenmantel festgelegt. Wenn der Leitkörper aus einem starren Material besteht, besteht notwendiger Weise die Kühlmittelführungsemrichtung aus einem elastischen Material, so dass der Walzenmantel an einer Durchbiegung senkrecht zur Richtung der Walzenachse, insbesondere im vorzugsweise bombierten Mittelbereich der Walze, durch das Kühlsystem nicht gehindert wird. Über die elastische Kühlmittelführungseinrichtung erfolgt keine Kraftübertragung vom Walzenmantel auf den Leitkörper, die Kräfte werden ausschließlich über die Stirnelemente abgetragen.

Eine alternative Ausgestaltung der Walze sieht vor, dass der Leitkörper aus einem elastischen Material besteht, wobei die Kühlmittelführungseinrichtung vorzugsweise in die Mantelfläche des Leitkörpers eingebracht ist. Der Leitkörper besteht dafür beispielsweise aus einem Kunststoffrohr, in dessen Oberfläche mindestens eine spiralförmig über den Umfang des Leitkörpers verlaufende Kühlmittelführungseinrichtung eingefräst ist. Das Kunststoffrohr weist dafür vorteilhafterweise einen Außendurchmesser auf, der etwa dem Innendurchmesser des Walzenmantels entspricht. Das Kunststoffrohr kann dadurch passgenau in den Walzenmantel eingebracht werden, wobei in dem zwischen Walzenmantel und Kunststoffrohr definierten Kühlkanal eine Kühlflüssigkeit durchleitbar ist. Das Kunststoffrohr weist bevorzugt eine hohe Elastizität auf, so dass durch das Kunststoffrohr die Durchbiegung des Walzenmantels nicht behindert wird. Das Kunststoffrohr liegt dabei stets an der Mantelinnenseite des Walzenmantels an und folgt dessen Bewegung, so dass der Kanal nicht unterbrochen wird.

Alternativ zu dem in ein Kunststoffrohr eingefrästen Kühlkanal kann auch vorgesehen sein, dass auf den elastischen Leitkörper eine elastische Kühlmittelführungseinrichtung aufgebracht ist, um so ein hochelastisches Kühlsystem aus elastischem Leitkörper und elastischer Kühlmittelführungseinrichtung innerhalb des Walzenkörpers zu erhalten. Das Kühlsystem - der Leitkörper und die Kühlmittelführungseinrichtung - dienen ausschließlich der Führung des Kühlmittels innerhalb des Walzenkörpers und versteifen oder verstärken den Walzenmantel nicht.

Die Übertragung der Kräfte soll ausschließlich über die beiden Stirnelemente erfolgen, weshalb das erste Stirnelement und das zweite Stirnelement jeweils als Festlager für den Walzenmantel ausgestaltet sind, indem die Stirnelemente mit dem Walzenmantel verbunden sind. Die Verschraubung der Stirnelemente mit dem Walzenmantel hat den Vorteil, dass eine Öffnung des Walzenkörpers zu Wartungszwecken problemlos möglich ist, gleichzeitig jedoch eine zuverlässige Ableitung der Kräfte über die beiden Stirnelemente auf die Walzenachse erfolgt. Damit die Kraftübertragung von den Stirnelementen auf die Walzenachse erfolgt, ist bevorzugt vorgesehen, dass am ersten Stirnelement und/oder am zweiten Stirnelement jeweils ein Wellenansatz vorgesehen ist. Über die Wellenansätze wird die Walze gelagert und über mindestens einen Wellenansatz angetrieben. Die Wellenansätze sind einstückig mit den Stirnelementen ausgeführt, können alternativ jedoch auch nachträglich an den Stirnelementen - etwa durch eine stoff-, form- oder kraftschlüssige Verbindung - befestigt sein.

Das Kühlmittel oder das Heizmedium wird vorzugsweise durch die Seitenelemente - zentral im Bereich der Achse - in den Walzenkörper eingebracht und aus diesem abgeführt. Als besonders vorteilhaft hat es sich herausgestellt, wenn das erste Stirnelement und der Wellenansatz eine zentrale Durchgangsbohrung aufweisen, in die ein Rohrelement eingebracht ist. Das Rohrelement weist vorzugsweise einen geringeren Durchmesser als die Durchgangsbohrung auf, so dass, wenn das Rohrelement zentral in der Durchgangsbohrung gehalten wird, ein umlaufender Ringspalt um das Rohrelement entsteht. Das Kühlmedium kann nun durch das Rohrelement in den Walzenkörper eingebracht werden und nachdem es mindestens einen Kühlkanal durchlaufen hat, durch den - das Rohrelement umgebenden - Ringspalt wieder herausgeführt werden. Durch diese Ausgestaltung des Wellenansatzes und des Stirnelements wird ermöglicht, dass sich der Zu- und der Ablauf des Kühlmittels an einer Seite der Walze befinden, so dass an der anderen Seite beispielsweise der Antrieb eingerichtet sein kann. Alternativ dazu ist auch vorgesehen, dass sich der Zu- und Ablauf an zwei unterschiedlichen Stirnelementen befinden, so dass das Kühlmittel die Walze - bei Gleichstrom - lediglich in einer Richtung durchläuft.

Um innerhalb des Walzenkörpers eine entsprechende Führung des Kühlmittels - neben dem eigentlichen Kühlkanal - einzurichten, ist vorzugsweise vorgesehen, dass innerhalb des Leitkörpers ein Rohrelement vorgesehen ist, das sich im Wesentlichen in Längsrichtung des Leitkörpers erstreckt. Bei diesem Rohrelement kann es sich beispielsweise um das gleiche Rohrelement handeln, das die zentrale Durchgangsbohrung im ersten Stirnelement und im Wellenansatz durchtritt und nachfolgend innerhalb des Walzenkörpers weitergeführt wird. Durch dieses Rohrelement wird das Wasser von der Eintrittsseite auf die der Eintrittsseite gegenüberliegende Seite der Walze geleitet und dort radial in mindestens einen Kühlkanal verteilt. Durch den Kühlkanal fließt das Kühlmittel durch den spiralförmigen Kanal entlang des Umfangs wieder in die entgegengesetzte Richtung der Walze, wird am Eintrittsende erneut gesammelt und durch den Ringspalt um das Rohrelement wieder aus dem Walzenkörper herausgeführt.

Das zuvor beschriebene Kühlsystem, das aus einem Leitkörper und der Kühlmittelführungseinrichtung besteht, eignet sich insbesondere auch zur Nachrüstung innerhalb einer bestehenden Walze, die einen entsprechenden Hohlraum aulweist. Das Kühlsystem wird individuell an die Baugröße und Form der Walze angepasst und in den Walzenkörper eingefügt. Bestehende Walzen können so kostengünstig mit dem erfindungsgemäßen Kühlsystem nachgerüstet werden, ohne dass sich die Eigenschaften der Walze, insbesondere hinsichtlich der Durchbiegungseigenschaften, verändern. Durch das erfindungsgemäße Kühlsystem wird jedoch die Leistung der Walze erhöht, da Arbeitsgeschwindigkeiten oder Produktdurchsatz gesteigert werden können. Dadurch, dass die Durchbiegungsfähigkeit der Walze im balligen Bereich erhalten bleibt, verbessern sich auch die Verschleißeigenschaften gegenüber denen bekannter steifer Walzen mit einem balligen Profil und einer Kühleinrichtung.

Die erfindungsgemäße Walze eignet sich bevorzugt zur Verwendung in einem Walzenstuhl auf dem wenigstens zwei, insbesondere vier weitere Walzen vorgesehen sind. Um eine optimale Leistungssteigerung im Produktionsprozess zu erreichen ist es besonders vorteilhaft, erfindungsgemäße Walzen als letzte oder als letzte und vorletzte Walze innerhalb des Walzenstuhls anzuordnen, da hier erfahrungsgemäß die Temperaturen des Walzgutes und damit auch der Walzenoberfläche am größten sind. Selbstverständlich ist es jedoch auch möglich, dass mehr als eine oder zwei erfindungsgemäße Walze in einem Walzenstuhl eingesetzt werden.

Im Einzelnen gibt es nun eine Vielzahl von Möglichkeiten die erfindungsgemäße Walze auszugestalten und weiterzubilden. Dazu wird verwiesen sowohl auf die den Patentansprüchen 1 und 11 nachgeordneten Patentansprüche als auch auf die nachfolgende Beschreibung bevorzugter Ausführungsbeispiele in Verbindung mit der Zeichnung. In der Zeichnung zeigen:
- Fig. 1: ein Ausführungsbeispiel einer erfindungsgemäßen Walze mit starrem Leitkörper und elastischer Kühlmittelführungseinrich- tung,
- Fig. 2: ein Ausführungsbeispiel des erfindungsgemäßen Kühlsystems für eine Walze, und
- Fig. 3: ein Ausführungsbeispiel einer erfindungsgemäßen Walze mit ei- nem elastischem Leitkörper und einer starrer Kühlmittelfüh- rungseinrichtung.

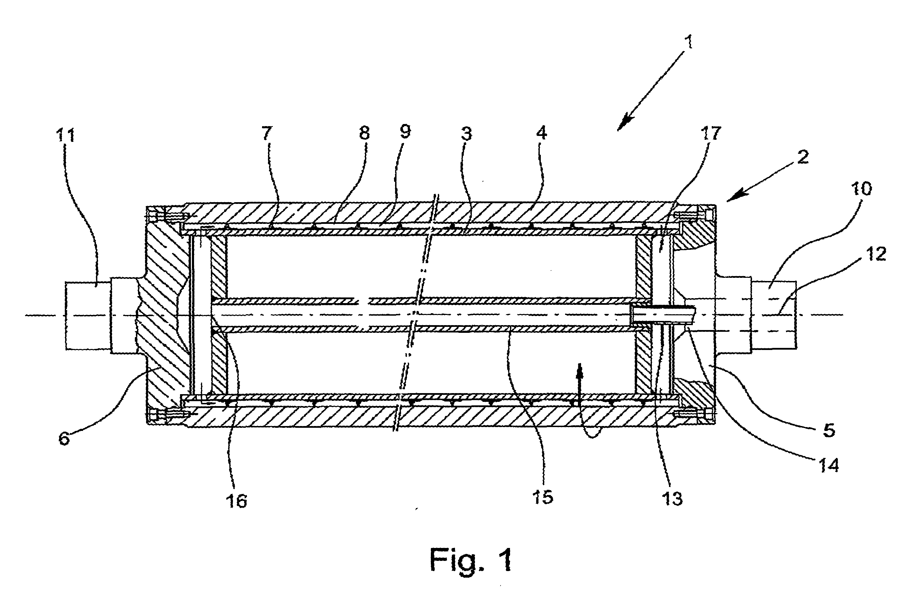

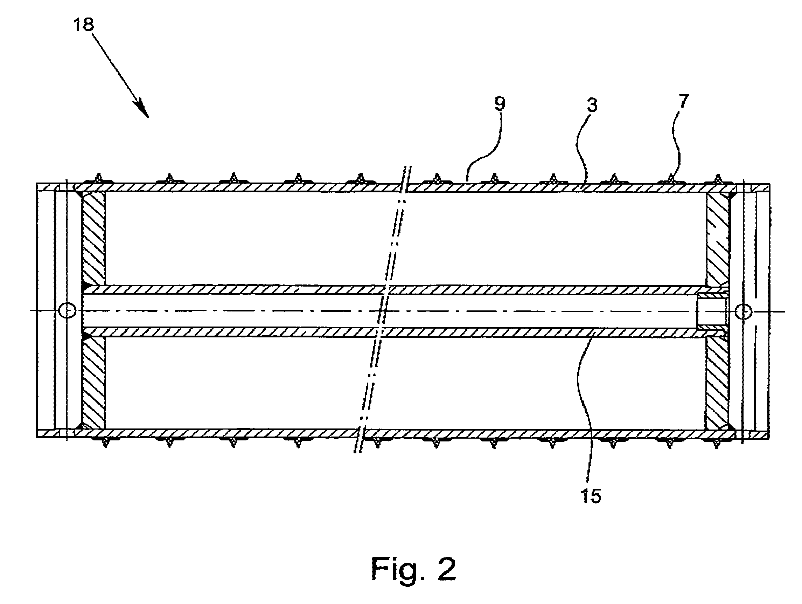

Fig. 1 zeigt eine erfindungsgemäße Walze 1 mit einem Walzenkörper 2 und einem Leitkörper 3, wobei der Walzenkörper 2 einen Walzenmantel 4, ein erstes Stirnelement 5 und ein zweites Stirnelement 6 aufweist, und der Leitkörper 3 mit einer Kühlmittelführungseinrichtung 7 innerhalb des hohlen Walzenkörpers 2 angeordnet ist. Der Leitkörper 3 besteht aus einem starren Material und ist von einer im Wesentlichen T-förmigen Dichtung als Kühlmittelführungseinrichtung 7 spiralförmig umwickelt, so dass die Kühlmittellführungseinrichtung 7 zusammen mit dem Leitkörper 3 und der Mantelinnenfläche 8 des Walzenmantels 4 einen Kanal 9 definieren, der spiralförmig um den Leitkörper 3 verläuft. Der Leitkörper 3 mit der Kühlmittelführungseinrichtung 7 stellt das Kühlsystem dar, das auch in Fig. 2 dargestellt ist.

Der Walzenmantel 4 der in Fig. 1 dargestellten Walze 1 wird von dem ersten Stirnelement 5 - in Fig. 1 rechts dargestellt - und auf seiner in Fig. 1 links dargestellten Seite von dem zweiten Stirnelement 6 abgeschlossen, indem die Stirnelemente 5, 6 mit dem Walzenmantel 4 über die Umfangsfläche an den Stirnseiten verschraubt sind. An dem ersten Stirnelement 5 ist ein erster Wellenansatz 10 und an dem zweiten Stirnelement 6 ein zweiter Wellenansatz 11 vorgesehen. Der erste Wellenansatz 10 und das erste Stirnelement 5 weisen eine zentrale Durchgangsbohrung 12 auf, in die ein Rohrelement 13 zentral eingebracht ist, so dass um das Rohr 13 ein Ringspalt 14 ausgebildet ist. Das durch die Durchgangsbohrung 12 hindurch tretende Rohrelement 13 steht mit einem weiteren Rohrelement 15 in Verbindung, das sich in Längsrichtung des Leitkörpers 3 erstreckt und zur Führung eines Kühlmittels dient. Die Verbindung zwischen den beiden Rohrelementen 13, 15 erfolgt flüssigkeitsdicht.

Gemäß dem Ausführungsbeispiel in Fig. 1 tritt das Kühlmittel innerhalb des Rohrelements 13 in den Walzenkörper 2 ein und wird innerhalb des Rohrelements 15 durch den Leitkörper 3 auf die gegenüberliegende Seite des Leitkörpers 3 geleitet. Auf der gegenüberliegenden Seite des Leitkörpers 3 am Austritt 16 des Rohrelements 15 wird das Kühlmittel radial verteilt und tritt in den Kanal 9 ein. Durch den Kanal 9 wird das Kühlmittel spiralförmig an der Mantelinnenfläche 8 des Walzenmantels 4 entlang geführt und kühlt diesen, indem die Wärme an das Kühlmittel übertragen wird. Die Dichtung als Kühlmittelführungseinrichtung 7 ist dabei derart auf den Leitkörper 3 gewickelt, dass die Abstände zwischen den einzelnen Wicklungen in Richtung des Kühlmittelaustritts - in Fig. 1 rechts dargestellt - abnehmen, wodurch der Querschnitt des Kanals 9 reduziert wird, so dass die Fließgeschwindigkeit des Kühlmittels zum Ende des Kanals 9 erhöht wird; der Querschnitt des Kanals 9 ist degressiv. Der degressiv verlaufende Kanalquerschnitt führt insgesamt zu einer gleichmäßigeren Kühlung des Walzenmantels 4 über seine Längserstreckung. Anschließend wird das Kühlmittel wieder radial in einem Sammelbereich 17 gesammelt und durch den Ringspalt 14 wieder aus der Walze 1 herausgeführt.

Dadurch, dass die Kühlmittelführungseinrichtung 7 elastisch ist, können keine Kräfte von dem Walzenmantel 4 auf den Leitkörper 3 übertragen werden. Die Kräfte werden ausschließlich über die Stirnelemente 5, 6 auf die Wellenansätze 10, 11 und von dort auf geeignete Lager - in einem nicht dargestellten Walzenstuhl - übertragen. Der Antrieb der Walze 1 erfolgt über den Wellenansatz 11 der mit dem Stirnelement 6 einstückig ausgeführt ist, so wie auch das Stirnelement 5 mit dem Wellenansatz 10 einstückig ausgeführt ist.

Fig. 2 zeigt ein Ausführungsbeispiel eines erfindungsgemäßen Kühlsystems 18, das sich insbesondere zur Nachrüstung in Walzen mit einem hohlen Walzenkörper eignet. Das Kühlsystem 18 verfügt - wie auch bereits in Fig. 1 beschrieben - über einen starren Leitkörper 3, der spiralförmig von einer elastischen Kühlmittelführungseinrichtung 7 umwickelt ist. Innerhalb des Leitkörpers 3 verläuft ein Rohrelement 15, mit dem das Kühlmittel innerhalb des Leitkörpers 3 transportiert werden kann. Das Kühlsystem 18 ist in bestehende Walzen einbringbar und optimiert innerhalb der bestehenden Walze die Kühlmittelführung, indem das Kühlmittel durch den Kanal 9 entlang der - in Fig. 1 dargestellten - Mantelinnenfläche 8 geleitet wird und in jeder Drehposition der Walze 1 eine gleichmäßige Kühlung des gesamten Walzenmantels 4 gewährleistet. Das Kühlsystem 18 gemäß Fig. 2 wird allerdings nicht an den Stirnelementen einer Walze befestigt, sondern wird lediglich innerhalb des Walzenkörpers durch den radialen Kontakt der Dichtung 7 mit der Mantelinnenfläche der Walze gestützt. Optional kann das Kühlsystem 18 jedoch auch an den Stirnelementen einer Walze befestigt werden.

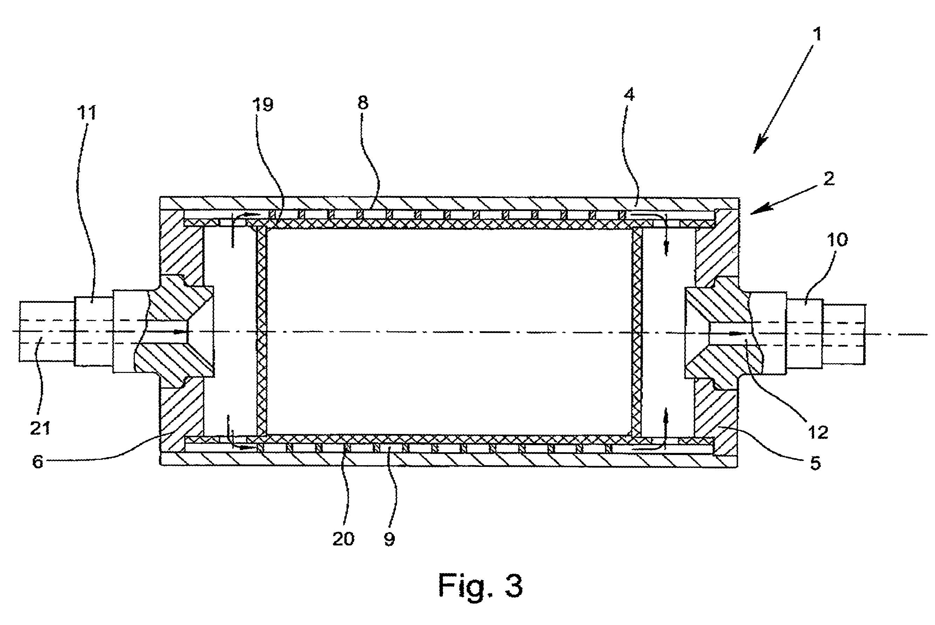

Fig. 3 zeigt ein Ausführungsbeispiel einer erfindungsgemäßen Walze 1 mit einem Walzenmantel 4, einem ersten Stirnelement 5, einem zweiten Stirnelement 6, einem ersten Wellenansatz 10 und einem zweiten Wellenansatz 11. Der Leitkörper 19 innerhalb des Walzenkörpers 2 ist aus einem elastischen Kunststoff hergestellt und von einer starren oder elastischen Kühlmittelführungseinrichtung 20 umgeben, so dass wiederum ein Kanal 9 entsteht. Der Leitkörper 19 ist derart elastisch, dass sich der Walzenmantel 4 durchbiegen und verformen kann, ohne dass seine Bewegung durch die Kühlmittelführungseinrichtung 20 oder den Leitkörper 19 behindert wird. Die Kühlmittelführungseinrichtung 20 und der elastische Leitkörper 19 weichen der Durchbiegung des Walzenmantels 4 aus.

Die Kühlmittelführung erfolgt bei dieser Ausgestaltung derart, dass das Kühlmittel durch eine zentrale Durchgangsbohrung 21 in dem zweiten Wellenansatz 11 eintritt und innerhalb des Walzenkörpers 2 radial in Richtung der Mantelinnenfläche 8 geleitet wird. Dort wird es durch die Kühlmittelführungseinrichtung 20 spiralförmig in Längsrichtung der Walze 1 an der Mantelinnenfläche 8 entlang geführt. An dem in Fig. 3 rechts dargestellten Seitenbereich der Walze 1 wird das Kühlmittel radial gesammelt und durch die Durchgangsbohrungen 12 in dem Wellenansatz 10 aus dem Walzenkörper 2 herausgeführt. Die Wellenansätze 10, 11 sind bei diesem Ausgestaltungsbeispiel separat zu den Stirnelementen 5, 6 ausgeführt, jedoch fest mit den Stirnelementen 5, 6 verbunden.

Auch bei dem Ausgestaltungsbeispiel gemäß Fig. 3 werden die Kräfte von dem Walzenmantel 4 ausschließlich über die Stirnelemente 5, 6 auf die Wellenansätze 10, 11 und von dort auf die entsprechenden Lager - in einem nicht dargestellten Walzenstuhl - übertragen, Eine Übertragung von Kräften auf den Leitkörper 3 erfolgt nicht, so dass die Durchbiegung des Walzenmantels 4 durch das Kühlsystem, d. h. den Leitkörper 19 mit der Kühlmittelfuhrungseinrichtung 20, nicht behindert wird und das Kühlsystem der Durchbiegung ausweicht.

## Patentansprüche

1. Walze, insbesondere Refinerwalze, mit einem Walzenkörper (2) und einem Leitkörper (3), wobei der Walzenkörper (2) einen Walzenmantel (4), ein erstes Stirnelement (5) und ein zweites Stirnelement (6) aufweist, und wobei in dem Walzenkörper (2) der Leitkörper (3) mit einer Kühlmittelführungseinrichtung (7) angeordnet ist,
**dadurch gekennzeichnet,**
**dass** der Leitkörper (3) und die Kühlmittelführungseinrichtung (7) von dem Walzenmantel (4) mechanisch entkoppelt sind, indem der Leitkörper (3) und/oder die Kühlmittelführungseinrichtung (7) elastisch sind bzw. ist,
so dass der Leitkörper (3) und/oder die Kühlmittelführungseinrichtung (7) einer senkrecht zur Richtung der Achse gerichteten Durchbiegung des Walzenmantels (4) ausweichen bzw. dieser Bewegung folgen kann, ohne der Durchbiegung des Walzenmantels (4) nennenswerte Kräfte entgegenzusetzen.

2. Walze nach Anspruch 1, **dadurch gekennzeichnet, dass** der Leitkörper (3), die Kühlmittelführungseinrichtung (7) und die Mantelinnenfläche (8) des Walzenmantels (4) wenigstens einen Kanal (9) für eine Kühlflüssigkeit definieren.

3. Walze nach Anspruch 2, **dadurch gekennzeichnet, dass** mindestens eine zweite Kühlmittelführungseinrichtung (7) vorhanden ist, so dass mindestens zwei Kanäle (9) für eine Kühlflüssigkeit definiert werden.

4. Walze nach einem der Ansprüche 1 bis 3, **dadurch gekennzeichnet, dass** der Leitkörper (3) aus wenigstens einem Zylinder besteht, auf dessen Mantelfläche mindestens eine, vorzugsweise spiralförmig über den Umfang verlaufende, Dichteinrichtung als Kühlmittelführungseinrichtung (7) angeordnet ist.

5. Walze nach einem der Ansprüche 1 bis 4, **dadurch gekennzeichnet, dass** der Leitköper (3) aus einem starren Material und die Kühlmittelführungseinrichtung (7) aus einem elastischen Material besteht, wobei der Leitkörper (3) vorzugsweise in seinen Endbereichen jeweils an einem Stirnelement (5, 6) befestigt ist.

6. Walze nach einem der Ansprüche 1 bis 4, **dadurch gekennzeichnet, dass** der Leitkörper (3) aus einem elastischen Material besteht, wobei die Kühlmittelführungseinrichtung (7) vorzugsweise in die Mantelfläche des Leitkörpers (3) eingebracht ist.

7. Walze nach einem der Ansprüche 1 bis 6, **dadurch gekennzeichnet, dass** das erste Stirnelement (5) und das zweite Stirnelement (6) jeweils als Festlager für den Walzenmantel (4) ausgestaltet sind, indem die Stirnelemente (5, 6) mit dem Walzenmantel (4) verbunden sind.

8. Walze einem der Ansprüche 1 bis 7, **dadurch gekennzeichnet, dass** an dem ersten Stirnelement (5) und/oder an dem zweiten Stirnelement (6) jeweils ein Wellenansatz (10, 11) vorgesehen ist.

9. Walze nach Anspruch 8, **dadurch gekennzeichnet, dass** das erste Stirnelement (5) und der Wellenansatz (10) eine zentrale Durchgangsbohrung (12) aufweisen, in die ein Rohrelement (13) eingebracht ist.

10. Walze nach einem der Ansprüche 1 bis 9, **dadurch gekennzeichnet, dass** innerhalb des Leitkörpers (3) ein Rohrelement (15) vorgesehen ist, das sich im Wesentlichen in Längsrichtung des Leitkörpers (3) erstreckt.

11. Kühlsystem für eine Walze, insbesondere zur Nachrüstung und zum Einbringen in einen hohlen Walzenkörper (2), mit einem zylindrischen Leitkörper (3) und einer Kühlmittelführungseinrichtung (7), **dadurch gekennzeichnet, dass** der Leitkörper (3) aus wenigstens einem Zylinder besteht, an dessen Mantelfläche mindestens eine über den Umfang verlaufende Dichteinrichtung als Kühlmittelführungseinrichtung (7) angeordnet ist und der Leitkörper (3) und/oder die Kühlmittelführungseinrichtung (7) elastisch sind bzw. ist.

12. Kühlsystem nach Anspruch 11, **dadurch gekennzeichnet, dass** der Leitköper (3) aus einem starren Material besteht, auf dessen Mantelfläche mindestens eine, vorzugsweise spiralförmig über den Umfang verlaufende, elastische Dichteinrichtung als Kühlmittelführungseinrichtung (7) angeordnet ist, wobei der Leitkörper (3) vorzugsweise in seinen Endbereichen jeweils an einem Stirnelement (10, 11) befestigt ist.

13. Kühlsystem nach Anspruch 11, **dadurch gekennzeichnet, dass** der Leitkörper (3) aus einem elastischen Material besteht, wobei die Kühlmittelführungseinrichtung (7) vorzugsweise in die Mantelfläche des Leitkörpers (3) eingebracht ist.

14. Kühlsystem einem der Ansprüche 11 bis 13, **dadurch gekennzeichnet**, **dadurch gekennzeichnet, dass** innerhalb des Leitkörpers (3) ein Rohrelement (15) vorgesehen ist, das sich im Wesentlichen in Längsrichtung des Leitkörpers (3) erstreckt.

15. Walzenstuhl mit mindestens einer Walze (1) nach einem der Ansprüche 1 bis 10, wobei der Walzenstuhl vorzugsweise insgesamt fünf Walzen ausweist.
